# EUROPÄISCHE PATENTSCHRIFT

(11) **EP 2 011 755 B1**
(45) Veröffentlichungstag und Bekanntmachung des Hinweises auf die Patenterteilung: **04.03.2009**
(21) Anmeldenummer: 07013083.6
(22) Anmeldetag: 04.07.2007
(51) Int. Cl.: B65H 23/02, G01D 5/34

(54) **Vorrichtung zum strichförmigen Beleuchten einer laufenden Warenbahn**
Device for linear illumination of a moving goods belt
Dispositif destiné à l'éclairage en forme de barre d'une bande de marchandise déroulante

(43) Veröffentlichungstag der Anmeldung: 07.01.2009
(73) Patentinhaber: Texmag GmbH Vertriebsgesellschaft, 8800 Thalwil (CH)
(72) Erfinder: Krebs, Stephan, Dr., 86899 Landsberg (DE); Eder, Alfred, 86450 Altenmünster (DE); Eisen, Jürgen, 86199 Augsburg (DE); Zwerger, Lars, 86152 Augsburg (DE)
(74) Vertreter: Witzany, Manfred

(56) Entgegenhaltungen:
- EP-A- 1 154 225
- DE-A1- 3 928 159
- US-A- 4 002 919

## Beschreibung

Die Erfindung betrifft eine Vorrichtung zum strichförmigen Beleuchten einer laufenden Warenbahn gemäß dem Oberbegriff des Patentanspruchs 1.

Aus der EP-B-1 154 225 ist eine Beleuchtungsvorrichtung für eine laufende Warenbahn bekannt, die eine optimale Abtastung der Warenbahn mit einer Kamera ermöglicht. Diese weist sowohl eine gerichtete als auch eine diffuse Lichtquelle auf, um möglichst unterschiedlichste Warenbahnen abtasten zu können. Diese Beleuchtungsvorrichtung hat sich in der Praxis gut bewährt und bildet den Ausgangspunkt der vorliegenden Erfindung.

Aus der DE-A-39 28 159 A1 ist ein gattungsgemäßer Kantenfühler bekannt, der eine Lichtquelle und einen Fotodetektor aufweist. Sowohl die Lichtquelle als auch der Fotodetektor sind von Reflektorschirmen umgeben, die jeweils zur Warenbahn hin offen sind. Diese Anordnung ist für die Anwendung des Durchlichtverfahrens ausreichend. Im Reflexionsverfahren, bei dem Lichtquelle und Empfänger auf der gleichen Seite der Warenbahn angeordnet sind, ist jedoch zwingend eine Beleuchtung der Warenbahn im spitzen Winkel erforderlich, da anderenfalls das von der Warenbahn reflektierte Licht nicht detektiert werden könnte.

Der Erfindung liegt die Aufgabe zugrunde, eine Vorrichtung der eingangs genannten Art zu schaffen, die eine hohe Leuchtdichte bei diffusem Licht erzielt.

Diese Aufgabe wird erfindungsgemäß mit den Merkmalen des Patentanspruchs 1 gelöst.

Die Vorrichtung gemäß Anspruch 1 dient zum strichförmigen Beleuchten einer laufenden Warenbahn. Sie weist mindestens eine Licht aussendende Lichtquelle auf, wobei es unerheblich ist, auf welche Art und Weise die Lichtquelle das Licht erzeugt. Beispielsweise könnte die Lichtquelle eine Halogenlampe, eine Leuchtdiode, eine Neonröhre, eine Glühlampe oder ein Laser sein. Diese Aufzählung ist jedoch nicht abschließend zu verstehen. Insbesondere bei der Anwendung moderner Zeilenkameras mit hoher Pixeldichte zur optimalen Abtastung der Warenbahn kommen recht kleine Fotodioden zum Einsatz, die zur Erzielung eines gut auswertbaren Fotosignals eine recht große Leuchtdichte benötigen. Kommt eine Zeilenkamera zum Einsatz, so reicht grundsätzlich eine strichförmige Beleuchtung der Warenbahn aus, da die Kamera ohnehin nur einen strichförmigen Bereich der Warenbahn auswerten kann. In diesem Fall ist es günstig, die Warenbahn möglichst strichförmig mit geringer Strichbreite zu beleuchten, um auf der kleinen ausgewerteten Fläche eine möglichst hohe Leuchtdichte zu realisieren. Grundsätzlich wäre dies mit gerichtetem Licht möglich, welches über eine entsprechende Optik auf die Warenbahn fokusiert wird. Diese Maßnahme hat jedoch den Nachteil, daß eine Vielzahl von Warenbahnen nicht vernünftig abgetastet werden kann, die diffuses Licht erfordern. Insbesondere zur Druckbilddetektion ist diffuses Licht unerläßlich. Um diffuses Licht mit hoher Leuchtdichte auf einen strichförmigen Auswertebereich der Warenbahn zu bringen, ist erfindungsgemäß vorgesehen, daß das von der Lichtquelle ausgesendete Licht von mindestens einem rohrförmigen Reflektor gegen die Warenbahn reflektiert wird. Im rohrförmigen Reflektor wird das Licht vorzugsweise mehrfach reflektiert, bis es einen der Warenbahn zugewandten Lichtaustrittsschlitz erreicht. Dieser Lichtaustrittsschlitz wird dabei mit hoher Leuchtdichte beleuchtet und kann damit auch von hoch auflösenden Kameras mit kleiner Pixelstruktur gut optisch abgetastet werden. Zu diesem Zweck weist der rohrförmige Reflektor mindestens einen Beobachtungsschlitz auf, an dem von der Warenbahn reflektiertes Licht austreten kann. Dieser Beobachtungsschlitz liegt dem Lichtaustrittsschlitz gegenüber. Eine Zeilenkamera kann daher oberhalb des Beobachtungsschlitzes vorgesehen werden, so daß sie durch den Beobachtungsschlitz hindurch auf die beleuchtete Warenbahn blickt. Der Beobachtungsschlitz kann in diesem Fall schmal bleiben, so daß nur wenig Licht der Lichtquelle direkt den Beobachtungsschlitz verläßt. Trotzdem kann die Warenbahn flächig abgetastet werden, wenn sie sich quer zum Beobachtungsschlitz bewegt. Auf diese Weise genügt eine recht geringe Lichtstärke der mindestens einen Lichtquelle, um eine hohe Leuchtdichte im Bereich des Lichtaustrittsschlitzes zu erzeugen. Dadurch wird die Beleuchtungsvorrichtung nicht nur energieeffizient, sondern reduziert auch Probleme mit der Wärmeabführung der Lichtquelle. Zur Justierung der Kamera oberhalb des Beobachtungsschlitzes genügt es, jenen Punkt zu finden, an dem die beobachtete Bildhelligkeit maximal wird. Damit kann sehr einfach eine korrekte Justierung der Kamera zum Beobachtungsschlitz der Beleuchtungsvorrichtung erzielt werden.

Soll der Lichtaustritts- bzw. Beobachtungsschlitz variabel ausgebildet sein, so ist es gemäß Anspruch 2 günstig, wenn der jeweilige Schlitz den rohrförmigen Reflektor vollständig durchsetzt. Durchsetzen beide Schlitze den rohrförmigen Reflektor, so besteht dieser aus zwei gegeneinander beliebig verstellbaren Teilen, die durch geeignete Manipulatoren gegeneinander verstellbar sind. Durchsetzt dagegen nur einer der Schlitze den Reflektor vollständig, so kann dieser Schlitz durch einfaches Deformieren des Reflektors in seiner Breite verstellt werden. Vorzugsweise erfolgt die Deformation elastisch.

Alternativ ist es gemäß Anspruch 3 günstig, wenn der Lichtaustritts- bzw. Beobachtungsschlitz von mindestens einem Steg überbrückt ist. Dieser Steg befindet sich bevorzugt in mindestens einem Endbereich des rohrförmigen Reflektors. Damit kann die Kamera derart eingestellt werden, daß sie den Stegbereich nicht abtastet. Die Stege behindern daher die optische Erfassung der Warenbahn in keiner Weise. Die Stege selbst erhöhen jedoch die Stabilität des rohrförmigen Reflektors, so daß dieser einfacher zu handhaben ist.

Insbesondere bei Verwendung nur einer Lichtquelle am stirnseitigen Ende des rohrförmigen Reflektors oder bei Beleuchtung des Reflektors über dessen Länge verteilt, ist es gemäß Anspruch 4 vorteilhaft, wenn der Reflektor an mindestens einem Ende reflektierend abgeschlossen ist. Dieser reflektierende Abschluß verhindert ein Austreten des Lichts an den Enden des rohrförmigen Reflektors und erhöht damit die Leuchtdichte am Lichtaustrittsschlitz.

Um insbesondere die Erfassung der Warenbahn durch eine Kamera nicht zu beeinträchtigen, ist es gemäß Anspruch 5 vorteilhaft, wenn die mindestens eine Lichtquelle an mindestens einem Ende des Reflektors vorgesehen ist. Die Lichtquelle selbst liegt damit außerhalb des Erfassungsbereichs der Kamera und kann außerdem problemlos gewechselt werden. Alternativ oder zusätzlich ist auch daran gedacht, die Lichtquelle in das Ende des Reflektors einzukoppeln, so daß ein größerer konstruktiver Spielraum zur Montage der Lichtquelle verbleibt. Insbesondere bei wärmeempfindlichen Warenbahnen wie beispielsweise Kunststoffbahnen ist es günstiger, die Lichtquelle weiter von der Warenbahn entfernt anzuordnen.

Zur Einkopplung der Lichtquelle haben sich gemäß Anspruch 6 Glas- oder Kunststofffasern sowie Spiegel bewährt. Diese erlauben eine effektive Einkopplung des von der Lichtquelle abgegebenen Lichts in den rohrförmigen Reflektor.

Zur Erzielung einer hohen Beleuchtungsintensität der Warenbahn ist es wichtig, daß die Warenbahn möglichst nahe am Lichtaustrittsschlitz des rohrförmigen Reflektors vorbeigeführt wird. Zur Erleichterung dieser Anordnung ist es gemäß Anspruch 7 günstig, wenn der Reflektor warenbahnseitig abgeflacht ist. Damit kann die Warenbahn in etwa um die Materialstärke des Reflektors näher an den Lichtaustrittsschlitz des Reflektors herangeführt werden.

Grundsätzlich könnte der Reflektor das auftreffende Licht diffus reflektieren. Gemäß Anspruch 8 ist es jedoch vorteilhaft, wenn der Reflektor spiegelnd reflektierend ausgebildet ist. Auf diese Weise sind grundsätzlich höhere Reflektivitäten erzielbar, so daß die Abnahme der Leuchtdichte mit der Anzahl der Reflexionen am Reflektor geringer bleibt. Außerdem sind die spiegelnd reflektierenden Flächen weniger verschmutzungsempfindlich als die diffus reflektierende Flächen. Es ist auch daran gedacht, optisch vergütete Reflektoren einzusetzen, um die Reflektivität weiter zu erhöhen.

Schließlich ist es gemäß Anspruch 9 vorteilhaft, wenn der Reflektor im Querschnitt im wesentlichen kreisförmig oder elliptisch ausgebildet ist. Diese Form gewährleistet eine hohe Leuchtdichte im Lichtaustrittsschlitz.

Der Erfindungsgegenstand wird beispielhaft anhand der Zeichnung erläutert, ohne den Schutzumfang zu beschränken.

Es zeigt:
- Figur 1: eine schematische, räumliche Darstellung einer ersten Ausführungsform einer Beleuchtungsvorrichtung,
- Figur 2: eine schematische, räumliche Darstellung einer zweiten Ausführungsform einer Beleuchtungsvorrichtung,
- Figur 3: eine schematische, räumliche Darstellung einer dritten Ausführungsform einer Beleuchtungsvorrichtung,
- Figur 4: eine schematische Schnittdarstellung einer vierten Ausführungsform,
- Figur 5: eine schematische Schnittdarstellung einer fünften Ausführungsform,
- Figur 6: eine schematische Schnittdarstellung einer sechsten Ausführungsform und
- Figur 7: eine schematische Schnittdarstellung einer siebten Ausführungsform.

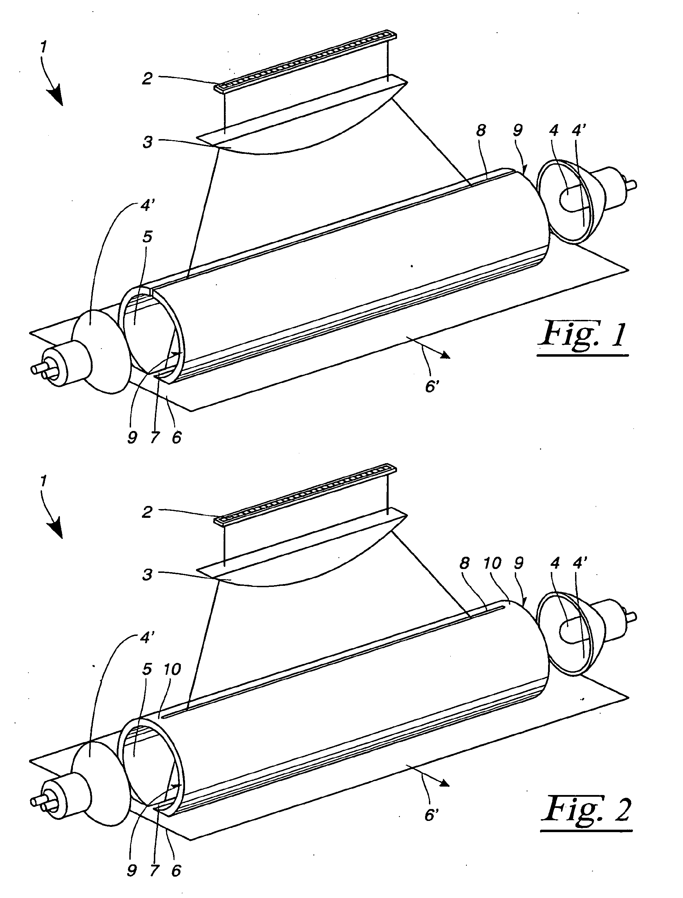

Die Figur 1 zeigt eine räumliche, schematische Explosionsdarstellung einer Beleuchtungsvorrichtung 1, der eine Zeilenkamera 2 zugeordnet ist. Die Zeilenkamera 2 weist ein Objektiv 3 in Form einer Zylinderlinse auf, die das aufgenommene Bild auf die Zeilenkamera 2 fokusiert.

Die Beleuchtungsvorrichtung 1 weist zwei Lichtquellen 4 auf, die an beiden stirnseitigen Enden 9 eines rohrförmigen Reflektors 5 vorgesehen sind. Um die beiden Lichtquellen 4 herum sind Reflektoren 4' vorgesehen, die die beiden Stirnseiten des Reflektors 5 abschließen.

Der rohrförmige Reflektor 5 weist an der einer in Richtung 6' laufenden Warenbahn 6 zugewandten Seite einen Lichtaustrittsschlitz 7 auf, der den Reflektor 5 vollständig durchsetzt. Im Bereich des Lichtaustrittsschlitzes 7 ist der Reflektor 5 warenbahnseitig abgeflacht, um die Warenbahn 6 näher an den Reflektor 6 heranführen zu können. Dem Lichtaustrittsschlitz 7 ist ein Beobachtungsschlitz 8 gegenüberliegend vorgesehen, der den Reflektor 5 ebenfalls vollständig durchsetzt. Die beiden Schlitze 7, 8 teilen damit den Reflektor 5 in zwei separate Teile, die entsprechend zueinander und relativ zur Warenbahn 6 gehalten werden müssen.

Die Zeilenkamera 2 und das Objektiv 3 werden relativ zum Reflektor 5 derart justiert, daß diese genau auf den Beobachtungsschlitz 8 ausgerichtet sind und die Zeilenkamera 2 durch den Reflektor 5 hindurch die Warenbahn 6 im Lichtaustrittsschlitz 7 sieht. Durch mehrfache Reflexionen des Lichts der beiden Lichtquellen 4 innerhalb des Reflektors 5 ergibt sich eine hohe Leuchtdichte im Bereich des Lichtaustrittsschlitzes 7. Sowohl der Lichtaustrittsschlitz 7 als auch der Beobachtungsschlitz 8 können durch Gegeneinanderverstellen der beiden Reflektorhälften in ihrer Breite variiert werden.

Die Figur 2 zeigt eine alternative Ausführungsform der Beleuchtungsvorrichtung 1 gemäß Figur 1, wobei im folgenden lediglich auf die Unterschiede zur Ausführungsform gemäß Figur 1 eingegangen wird. Bei allen Ausführungsformen benennen gleiche Bezugszeichen gleiche Teile.

Bei der Ausführungsform gemäß Figur 2 durchsetzt der Beobachtungsschlitz 8 den Reflektor 5 nicht mehr vollständig, so daß an beiden Enden 9 jeweils ein Steg 10 verbleibt. Diese Stege 10 sorgen für eine verbesserte mechanische Stabilität des Reflektors 5, wobei der Beobachtungsschlitz 8 - bedingt durch die Stege 10 - nicht mehr in seiner Breite verstellbar ist. Durch elastische Deformation des Reflektors 5 kann jedoch der Lichtaustrittsschlitz 7 in seiner Breite verändert werden.

Alternativ zur Ausführungsform gemäß Figur 2 können die Stege 10 auch im Bereich des Lichtaustrittsschlitzes 7 vorgesehen sein, so daß der Lichtaustrittsschlitz 7 in seiner Breite fest ist. In diesem Fall wird der Beobachtungsschlitz 8 in seiner Breite durch Deformation des Reflektors 5 veränderlich.

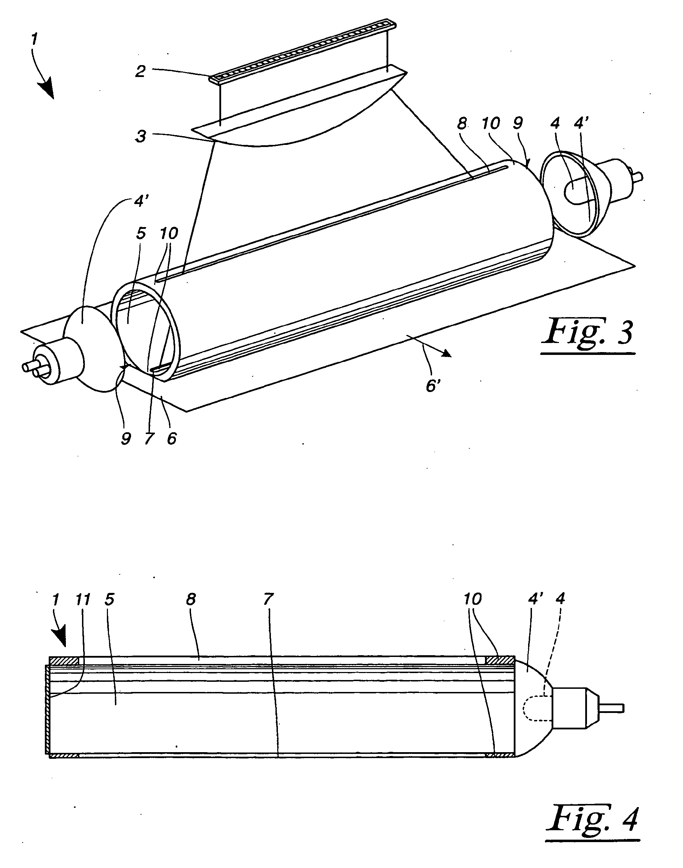

Die Figur 3 zeigt eine weitere alternative Ausführungsform, bei der sowohl der Lichtaustrittsschlitz 7 wie auch der Beobachtungsschlitz 8 den Reflektor 5 nicht mehr vollständig durchsetzen. An beiden Enden 9 überbrücken Stege 10 sowohl den Lichtaustrittsschlitz 7 als auch den Beobachtungsschlitz 8.

Durch diese Maßnahme wird erreicht, daß der gesamte Reflektor 5 mechanisch stabil und damit leicht zu handhaben ist. Die Breiten des Lichtaustrittsschlitzes 7 und des Beobachtungsschlitzes 8 sind jedoch in diesem Fall vorgegeben und nicht mehr veränderbar.

Die Figur 4 zeigt eine schematische Schnittdarstellung durch eine weitere Ausführungsform der Beleuchtungsvorrichtung. Diese Beleuchtungsvorrichtung 1 entspricht im wesentlichen der Ausführungsform gemäß Figur 3, wobei nur noch eine Lichtquelle 4 vorgesehen ist. An dem der Lichtquelle 4 gegenüberliegenden Ende 9 ist ein reflektierender, axialer Abschluß (11) des Reflektors 5 vorgesehen, um einen Lichtaustritt an dieser Stelle zu verhindern.

Der Abschluß 11 kann sowohl diffus als auch spiegelnd reflektierend ausgebildet sein.

Diese Maßnahme läßt sich auch mit dem Reflektor 5 gemäß der Figur 1 oder 2 realisieren.

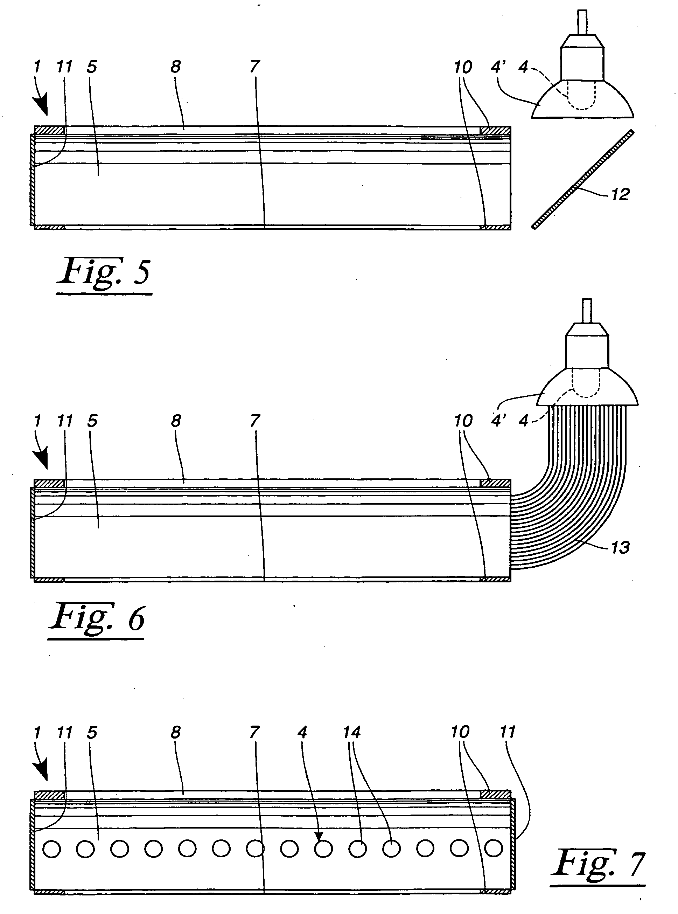

Die Figur 5 zeigt eine weitere Ausführungsform der Beleuchtungsvorrichtung 1 gemäß Figur 4. Bei dieser Ausführungsform wird die Lichtquelle 4 über einen Umlenkspiegel 12 in den Reflektor 5 eingekoppelt. Auf diese Weise kann der Abstand der Lichtquelle 4 von der Warenbahn 6 vergrößert werden, was insbesondere bei wärmeempfindlichen Warenbahnen 6 von Bedeutung ist.

Auch diese Anordnung der Lichtquelle 4 läßt sich mit dem Reflektor 5 gemäß der Figur 1 oder 2 realisieren.

Die Figur 6 zeigt eine weitere alternative Ausführungsform, bei der die Lichtquelle 4 über Faserbündel 13 in den Reflektor 5 eingekoppelt wird. Diese Faserbündel 13 erlauben einen noch größeren Abstand der Lichtquelle 4 von der Warenbahn 6, wobei zusätzlich Wärmestrahlung unterdrückt wird. Damit bleibt der Reflektor 5 kalt und belastet die Warenbahn 6 nicht mehr thermisch.

Auch diese Ausführungsform der Beleuchtung kann mit dem Reflektor 5 gemäß der Figur 1 oder 2 realisiert werden.

Schließlich zeigt die Figur 7 eine weitere schematische Schnittdarstellung einer Beleuchtungsvorrichtung 1. Bei dieser wird die Lichtquelle 4 von Leuchtdioden 14 realisiert, die vorzugsweise als Weißlicht-LED ausgebildet sind. Alternativ können auch andere LEDs eingesetzt werden. Insbesondere ist an Infrarot-LEDs in Form von GaAs-LEDs eingesetzt werden. Dies hängt hauptsächlich vom Zweck der durchzuführenden Untersuchungen ab. So ist Weißlicht bei der Analyse von Druckmustern vorzuziehen, während Infrarotlicht hauptsächlich für die Analyse von Webmustern sowie der fundamentalen Fadenstruktur vorzuziehen ist.

Da sich die Leuchtdioden 14 innerhalb des Reflektors 5 befinden, ist dieser beidseitig durch Spiegel 11 abgeschlossen.

Auch diese Beleuchtungsvorrichtung 1 kann mit dem Reflektor 5 gemäß der Figur 1 oder 2 realisiert werden.

### Bezugszeichenliste

- 1: Beleuchtungsvorrichtung
- 2: Zeilenkamera
- 3: Objektiv
- 4: Lichtquelle
- 4': Reflektor
- 5: Reflektor
- 6: Warenbahn
- 6': Laufrichtung
- 7: Lichtaustrittsschlitz
- 8: Beobachtungsschlitz
- 9: Ende
- 10: Steg
- 11: Abschluß
- 12: Umlenkspiegel
- 13: Faserbündel
- 14: Leuchtdiode

## Patentansprüche

1. Vorrichtung zum strichförmigen Beleuchten einer laufenden Warenbahn (6), wobei die Vorrichtung (1) mindestens eine Licht aussendende Lichtquelle (4) aufweist, wobei wenigstens ein Teil des von der Lichtquelle (4) ausgesendeten Lichtes gegen die Warenbahn (6) von mindestens einem Reflektor (5) reflektiert wird, der zumindest im der Warenbahn (6) zugewandten Bereich mindestens einen Lichtaustrittsschlitz (7) aufweist, **dadurch gekennzeichnet, daß** der Reflektor (5) rohrförmig ist und dem Lichtaustrittsschlitz (7) mindestens ein Beobachtungsschlitz (8) zum Austritt von Licht, welches von der Warenbahn (6) reflektiert wird, gegenüber liegt.

2. Vorrichtung nach Anspruch 1, **dadurch gekennzeichnet, daß** der Lichtaustritts- (7) und/oder Beobachtungsschlitz (8) den rohrförmigen Reflektor (5) vollständig durchsetzt.

3. Vorrichtung nach Anspruch 1 oder 2, **dadurch gekennzeichnet, daß** der Lichtaustritts- (7) und/oder Beobachtungsschlitz (8) vorzugsweise in mindestens einem Endbereich (9) des Reflektors (5) von mindestens einem Steg (10) überbrückt ist.

4. Vorrichtung nach mindestens einem der Ansprüche 1 bis 3, **dadurch gekennzeichnet, daß** der Reflektor (5) an mindestens einem Ende (9) reflektierend abgeschlossen ist.

5. Vorrichtung nach mindestens einem der Ansprüche 1 bis 4, **dadurch gekennzeichnet, daß** die mindestens eine Lichtquelle (4) an mindestens einem Ende (9) des Reflektors (5) vorgesehen ist und/oder eingekoppelt wird.

6. Vorrichtung nach Anspruch 5, **dadurch gekennzeichnet, daß** die Lichtquelle (4) über Glas-, Kunststofffasern (13) und/oder mindestens einem Umlenkspiegel (12) in den Reflektor (5) eingekoppelt wird.

7. Vorrichtung nach mindestens einem der Ansprüche 1 bis 6, **dadurch gekennzeichnet, daß** der Reflektor (5) warenbahnseitig abgeflacht ist

8. Vorrichtung nach mindestens einem der Ansprüche 1 bis 7, **dadurch gekennzeichnet, daß** der Reflektor (5) innenseitig spiegelnd reflektierend ist.

9. Vorrichtung nach mindestens einem der Ansprüche 1 bis 8, **dadurch gekennzeichnet, daß** der Reflektor (5) einen im wesentlichen kreisförmigen oder elliptischen Querschnitt aufweist.

## Claims

1. Apparatus for linear illumination of a moving product web (6), the apparatus (1) having at least one light source (4) emitting light, at least a portion of the light emitted by the light source (4) towards the product web (6) being reflected by at least one reflector (5) which, at least in the region facing the product web (6), has at least one light exit slit (7), **characterized in that** the reflector (5) is tubular and at least one observation slit (8) for the exit of light which is reflected by the product web (6) lies opposite the light exit slit (7).

2. Apparatus according to Claim 1, **characterized in that** the light exit slit (7) and/or the observation slit (8) completely penetrate (s) the tubular reflector (5).

3. Apparatus according to Claim 1 or 2, **characterized in that** the light exit slit (7) and/or observation slit (8) are/is preferably bridged by at least one web (10) in at least one end region (9) of the reflector (5).

4. Apparatus according to at least one of Claims 1 to 3, **characterized in that** the reflector (5) is closed in a reflecting fashion at at least one end (9).

5. Apparatus according to at least one of Claims 1 to 4, **characterized in that** the at least one light source (4) is provided at at least one end (9) of the reflector (5) and/or is coupled in.

6. Apparatus according to Claim 5, **characterized in that** the light source (4) is coupled into the reflector (5) via glass or plastic fibres (13) and/or at least one deflecting mirror (12).

7. Apparatus according to at least one of Claims 1 to 6, **characterized in that** the reflector (5) is flattened on the product web side.

8. Apparatus according to at least one of Claims 1 to 7, **characterized in that** the reflector (5) is specularly reflective on the inside.

9. Apparatus according to at least one of Claims 1 to 8, **characterized in that** the reflector (5) has a substantially circular or elliptical cross section.

## Revendications

1. Dispositif pour l'éclairage sous forme de traits d'une bande de produits en mouvement (6), le dispositif (1) présentant au moins une source de lumière (4) émettant de la lumière, au moins une partie de la lumière émise par la source de lumière (4) étant réfléchie contre la bande de produits (6) par au moins un réflecteur (5), qui présente au moins dans la région tournée vers la bande de produits (6) au moins une fente de sortie de lumière (7), **caractérisé en ce que** le réflecteur (5) est tubulaire et au moins une fente d'observation (8) pour la sortie de la lumière qui est réfléchie par la bande de produits (6) est en regard de la fente de sortie de lumière (7).

2. Dispositif selon la revendication 1, **caractérisé en ce que** la fente de sortie de lumière (7) et/ou la fente d'observation (8) traverse complètement le réflecteur tubulaire (5).

3. Dispositif selon la revendication 1 ou 2, **caractérisé en ce que** la fente de sortie de lumière (7) et/ou la fente d'observation (8), de préférence dans au moins une région d'extrémité (9) du réflecteur (5), est surmontée par au moins une nervure (10).

4. Dispositif selon au moins l'une quelconque des revendications 1 à 3, **caractérisé en ce que** le réflecteur (5) est terminé de manière réfléchissante à au moins une extrémité (9).

5. Dispositif selon au moins l'une quelconque des revendications 1 à 4, **caractérisé en ce que** l'au moins une source de lumière (4) est prévue et/ou est injectée à au moins une extrémité (9) du réflecteur (5).

6. Dispositif selon la revendication 5, **caractérisé en ce que** la source de lumière (4) est injectée dans le réflecteur (5) par le biais de fibres de verre, de fibres de plastique (13) et/ou d'au moins un miroir déflecteur (12).

7. Dispositif selon au moins l'une quelconque des revendications 1 à 6, **caractérisé en ce que** le réflecteur (5) est aplati du côté de la bande de produits.

8. Dispositif selon au moins l'une quelconque des revendications 1 à 7, **caractérisé en ce que** le réflecteur (5) est réfléchissant comme un miroir du côté interne.

9. Dispositif selon au moins l'une quelconque des revendications 1 à 8, **caractérisé en ce que** le réflecteur (5) présente une section transversale essentiellement circulaire ou elliptique.
